# EUROPEAN PATENT APPLICATION

(11) **EP 4 685 004 A1**
(43) Date of publication of application: **28.01.2026**
(21) Application number: 25191227.5
(22) Date of filing: 23.07.2025
(51) Int. Cl.: B60L 15/20

(54) **METHOD OF CONTROLLING THE ELECTRIC MOTOR OF A ROAD MOTOR VEHICLE**

(30) Priority: 25.07.2024 IT 202400017341
(71) Applicant: FERRARI S.p.A., 41100 Modena (IT)
(72) Inventor: BETRO', Roberto, 41100 MODENA (IT); BISCEGLIE, Giorgio, 41100 MODENA (IT); CORSETTI, Luigi, 41100 MODENA (IT); BORRINO, Procolo Ivan, 41100 MODENA (IT)
(74) Representative: Studio Torta S.p.A.

(57) **Abstract**

Method of controlling the electric motor of a road motor vehicle (1) comprising: a plurality of ground-resting wheels (8, 9); and an electric motor (4) which is mechanically connected to at least one drive wheel (9) of the vehicle by means of a transmission (11), and is adapted to drive into rotation said at least one drive wheel (9); the method of controlling the electric motor comprising a transmission preloading phase, in which the electric motor (4) delivers a driving torque capable of bringing the teeth of the various gears of the transmission (11) stably into abutment to one another, substantially without causing rotation of said at least one drive wheel (9); said transmission preloading phase comprising a mechanical backlash compensation transient step, wherein the rotation speed of the electric motor (4) is controlled such that the teeth of the various gears of the transmission (11) come into contact to one another with an approaching speed lower than a predetermined maximum threshold.

## Description

### CROSS-REFERENCE TO RELATED PATENT APPLICATIONS

This application claims the priority of Italian Patent Application No. 102024000017341 filed on July 25, 2024, the entire disclosure of which is incorporated herein by reference.

### TECHNICAL FIELD

The present invention relates to a method of controlling the electric motor of a road motor vehicle.

In more detail, the present invention preferably relates to a method of controlling the electric motor or motors of an electric-propulsion car, to which the following description will make explicit reference without any loss of generality.

### STATE OF THE ART

As is known, most electric-propulsion cars currently on the market are provided with at least one electric motor for traction, which is mechanically connected to the drive wheels of the vehicle via a gear train, traditionally called transmission, which normally includes a gear reduction unit, a differential and a pair of drive shafts.

Unfortunately, when the driver of the vehicle selects reverse gear, the transmission connecting the electric motor to the drive wheels of the vehicle generally produces a series of metallic noises, vibrations and jolts, which, although of short duration, can be clearly perceived even inside the vehicle, with all the comfort problems that this entails.

This behaviour, for example, is clearly perceptible during normal parking manoeuvres, when the electric motor of the car suddenly and repeatedly reverses the direction of rotation in response to the driver's requests.

In this case, in fact, the gear train that transmits the driving torque from the electric motor to the drive wheels of the vehicle is a continuous source of metallic noises, vibrations and jolts, which in some cases can reach such an intensity as to be considered unpleasant and annoying by the persons on board the vehicle.

The cause of these metallic noises, vibrations and jolts is traced back to the mechanical backlash which is normally present between the teeth of the various gears of the transmission, and to the behaviour of the electric motor which, when it reverses its rotation direction, usually generates such a high driving torque that it causes the gear teeth to violently strike and rebound to one another before reaching a stable contact configuration.

### SUMMARY OF THE INVENTION

Aim of the present invention is to minimise the metallic noises, vibrations and/or jolts that the transmission produces when the electric motor changes rotation direction to engage reverse gear or vice versa.

In accordance with the above aims, according to the present invention there is provided a method of controlling the electric motor of a road motor vehicle as defined in claim 1 and preferably, though not necessarily, in any one of the claims depending therefrom.

According to the present invention there is moreover provided an electric-propulsion road motor vehicle as defined in claim 9.

### BRIEF DESCRIPTION OF THE FIGURES

The present invention will now be described with reference to the accompanying drawings, which illustrate a non-limiting embodiment thereof, in which:
- Figure 1 is a schematic perspective view of an electric-propulsion motor vehicle made in accordance with the teachings of present invention, with parts in transparency and parts removed for clarity's sake;
- Figure 2 is a block diagram relating to the operation of the electronic control apparatus of the electric motor of the motor vehicle shown in Figure 1; and
- Figures 3a-3c and 4a-4c show the trend over time of some physical quantities relating to the transmission of the motor vehicle shown in Figure 1 during the reversal of the direction of rotation of the electric motor.

### DETAILED DESCRIPTION OF THE EMBODIMENTS

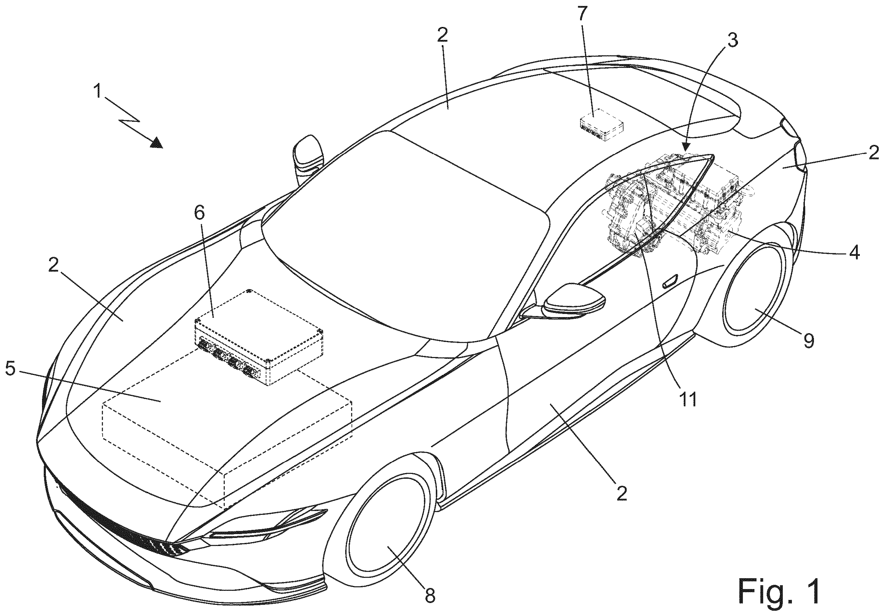

With reference to Figure 1, number 1 denotes as a whole an electric-propulsion road motor vehicle, which is provided with ground-resting wheels and which advantageously can be used for transporting goods and/or persons.

In more detail, the motor vehicle 1 is preferably a car for road use, that is a road motor vehicle for the private transport of persons.

The motor vehicle 1, in particular, is provided with a rigid vehicle-body 2, preferably with a self-supporting structure, which rests on the ground via a plurality of advantageously tyred, ground-resting wheels, and is provided with a passenger compartment structured and dimensioned to accommodate the vehicle driver (i.e. the person who drives the vehicle) and preferably also at least one passenger advantageously placed alongside the same driver.

In addition, the motor vehicle 1 further comprises: a powertrain 3, which is located on the vehicle-body 2, or more advantageously within the vehicle-body 2, and includes at least one electric motor 4 adapted to drive into rotation at least one or, more conveniently, at least a pair of said ground-resting wheels; an electric-energy accumulator 5, preferably of a rechargeable type, which is located on the vehicle-body 2, or more advantageously within the vehicle-body 2, and is capable of storing, inside itself, a given quantity of electric energy to be supplied to the electric motor 4; and an electronic motor-control equipment, which is located on the vehicle-body 2, or more advantageously within the vehicle-body 2, and is adapted to power and control the electric motor 4 according to commands it receives from the vehicle driver.

In more detail, the electronic motor-control equipment is interposed between the electric-energy accumulator 5 and the electric motor 4, and is adapted to control/regulate the flow of electric energy to electric motor 4, advantageously so as to control the driving torque, the rotation speed and the direction of rotation of the electric motor 4.

The electronic motor-control equipment, in addition, is preferably adapted to command the electric motor 4 according to commands given by the vehicle driver, for example, via the accelerator pedal (not shown in the figures) and/or the gear selector (not shown in the figures) that allows the vehicle driver to select manually and at will the forward or rearward gear (reverse gear).

Even more specifically, the electronic motor-control equipment preferably comprises: an electric power unit 6, which is interposed between the electric-energy accumulator 5 and the electric motor 4, and is adapted to control/ regulate the flow of electric energy towards the electric motor 4, so as to control the driving torque, the rotation speed and the direction of rotation of electric motor 4; and an electronic control unit 7 which is adapted to command the electric power unit 6 according to commands it receives from the vehicle driver, advantageously via the accelerator pedal (not shown in the figures) and/or the gear selector (not shown in the figures).

In other words, the electronic control unit 7 commands the electric power unit 6, which in turn suitably powers the electric motor 4.

Preferably, the motor vehicle 1 moreover comprises a charging unit (not shown), which is located on the vehicle-body 2, or more advantageously within the vehicle-body 2, and is selectively connectable to an external electric energy source so as to supply, to the electric-energy accumulator 5, the electric energy necessary for its recharging.

In more detail, with reference to Figure 1, the vehicle-body 2 is preferably oblong in shape, and preferably rests on the ground by means of at least one pair of front wheels 8 and at least one pair of rear wheels 9.

Preferably, the front wheels 8 and the rear wheels 9 are moreover located on the vehicle-body 2 in pairs on opposite sides of the vertical midplane of the vehicle, advantageously substantially at the vertices of a rectangle or an isosceles trapezium. Furthermore, the passenger compartment of the vehicle-body 2 is preferably located between the front wheels 8 and the rear wheels 9.

In addition, the front wheels 8 are preferably idle and steering wheels, while the rear wheels 9 are preferably drive and optionally also steering wheels.

In other words, the powertrain 3, or rather the electric motor 4, is preferably adapted to drive into rotation only the rear wheels 9.

In a different embodiment, however, the powertrain 3 may be adapted to drive into rotation the front wheels 8 in addition to, or in place of, the rear wheels 9.

In other words, the front wheels 8 may be drive wheels in addition to, or in place of, the rear wheels 9.

With reference to Figure 1, in particular, the powertrain 3 is preferably located in the rear part of vehicle-body 2, and includes, in addition to the electric motor 4, also a gear train 11, hereinafter also called transmission, which connects the electric motor 4 to the drive wheels of the vehicle, or rather to the rear wheels 9, so as to transmit the driving torque delivered by the electric motor 4 to the drive wheels of the vehicle, or rather to the rear wheels 9, and vice versa.

In the example shown, in particular, the electric motor 4 is preferably a polyphase (three-phase) alternating-current electric motor.

The electric power unit 6, therefore, is preferably adapted to transform/convert the direct-current electric energy arriving from the electric-energy accumulator 5 into alternating-current electric energy suitable for electric motor 4.

Transmission 11, on the other hand, preferably comprises a mechanical speed reducer advantageously located immediately downstream of electric motor 4, and a pair of drive shafts (not shown) that connect the speed reducer to the drive wheels of the vehicle, or rather to the rear wheels 9, advantageously via the interposition of a differential (not shown).

Preferably, the electric motor 4 can also function as an electric generator.

In other words, the electric motor 4 is preferably an electric traction machine of a reversible type, i.e. an electrical machine that can function both as an electric motor by absorbing electric energy and generating a mechanical driving torque, and as an electric generator by absorbing mechanical energy and generating electric energy.

The electric power unit 6, in turn, is preferably structured so as to control the flow of electric energy from the electric-energy accumulator 5 to the electric motor 4 and vice versa.

In other words, the electric power unit 6 is preferably a static electric-energy conversion unit, advantageously of a bidirectional type.

In the example shown, in particular, the electric power unit 6 preferably comprises at least one electronically controlled power inverter, advantageously of a bidirectional type, which is interposed between electric motor 4 and electric-energy accumulator 5, and is adapted to convert the direct-current electric energy arriving from the electric-energy accumulator 5 into alternating-current electric energy suitable for the electric motor 4, preferably varying its frequency and/or voltage according to the signals coming from the electronic control unit 7.

With reference to Figure 1, on the other hand, the electric-energy accumulator 5 is preferably a rechargeable battery pack, and is preferably located in the front part of the vehicle-body 2.

The battery pack, in addition, preferably has a nominal capacity greater than or equal to 50 kWh and/or a nominal voltage greater than 600 Volts or, more conveniently, equal to approximately 800 Volts.

In other words, the electric-energy accumulator 5 is preferably a high-voltage battery pack.

General operation of motor vehicle 1 is easily inferable from the above description. The electronic motor-control equipment powers and commands the electric motor 4 on the basis of commands received from the vehicle driver.

In addition, the electronic motor-control equipment, or rather the electronic control unit 7, is programmed/ configured to implement a transmission preloading procedure when the vehicle driver, advantageously with the wheels substantially stationary, selects the forward or reverse gear and/or switches from the forward gear to the reverse gear or vice versa.

Said transmission preloading procedure basically involves commanding the electric motor 4 so that the latter delivers a driving torque of a reduced value, but such as to bring and maintain the teeth of the various gears of the transmission 11 (or rather the flanks of the teeth of the gears of transmission 11) stably in abutment to one another, substantially without causing the rotation of the drive wheels of the vehicle, or rather of the rear wheels 9.

The electronic motor-control equipment, or rather the electronic control unit 7, is however programmed/configured so as to implement a transmission preloading procedure which comprises a mechanical backlash compensation transient step.

In more detail, said transmission preloading procedure preferably comprises a mechanical backlash compensation transient step and a stabilised preloading final step consecutive to one another.

In the mechanical backlash compensation transient step, the electronic motor-control equipment, or rather the electronic control unit 7, continuously regulates/varies the rotation speed of electric motor 4, so that the teeth of the various gears of transmission 11 (or rather the flanks of the teeth of the various gears of transmission 11) come into contact with one another with an approaching/impact speed lower than a predetermined maximum threshold, which advantageously allows a soft contact of the teeth of the various gears of transmission 11.

In more detail, the value of said predetermined maximum threshold is such as to avoid, or at least minimise, the arising of unpleasant noises, vibrations and/or jolts. That is to say, noises, vibrations and/or jolts, which intensity is perceptible by the vehicle driver and/or by the persons present inside the motor vehicle 1.

In other words, when the flanks of the teeth come into contact with one another, the gears of transmission 11 rotate with a relatively low angular speed that avoids, or at least minimises, the arising of noises, vibrations and/or jolts, which are clearly perceptible by the vehicle driver and/or by the persons present inside the motor vehicle 1.

In more detail, during said mechanical backlash compensation transient step, the electronic motor-control equipment, or rather the electronic control unit 7, preferably continuously regulates/varies the driving torque delivered by electric motor 4, so that the electric motor 4 rotates with an angular speed substantially equal to a target speed ω_{T}. This target speed ω_{T} allows the approaching/impact speed of the teeth of the various gears of transmission 11 to be maintained at a value less than or equal to said predetermined maximum threshold.

Preferably, the value of the target speed ω_{T} is moreover determined on the basis of the rotation speed of the drive wheels of the vehicle, or rather of the rear wheels 9, advantageously at beginning of said mechanical backlash compensation transient step.

Clearly, the value of said target speed ω_{T} depends on the structure of transmission 11.

In more detail, the value of said target speed ω_{T} is preferably less than or equal to 75 rpm (revolutions per minute) and more conveniently less than or equal to 50 rpm (revolutions per minute).

Preferably, the driving torque delivered by the electric motor 4 during said mechanical backlash compensation transient step is moreover variable over time, and stably remains below a predetermined maximum value which is advantageously equal to 5 Nm (newton metre).

In addition, the driving torque delivered by electric motor 4 during said mechanical backlash compensation transient step preferably reaches its maximum value at the end of the same mechanical backlash compensation transient step.

Clearly, during the mechanical backlash compensation transient step, the driving torque delivered by electric motor 4 only serves to displace/rotate by a few degrees the various gears (pinions, toothed wheels, etc.) of transmission 11, and substantially does not reach the drive wheels of the vehicle, or rather the rear wheels 9.

Preferably, said mechanical backlash compensation transient step has a duration lower than 3 s (seconds).

In the subsequent stabilised preloading step, instead, the electronic motor-control equipment, or rather the electronic control unit 7, controls the electric motor 4 so that the latter delivers, with the rotor stationary, a driving torque such as to maintain the teeth of the various gears of transmission 11 stably in abutment to one another.

In more detail, the electronic control unit 7 commands the electric motor 4 so that the latter continuously delivers a driving torque equal to a predetermined first preload value TRQ1, which allows the teeth of the various gears of transmission 11 (or rather the flanks of the teeth of the various gears of transmission 11) to be maintained stably in abutment to one another, substantially without causing a rotation of the drive wheels of the vehicle, or rather of the rear wheels 9.

Preferably, said preload value TRQ1, furthermore, remains substantially constant over time and/or preferably ranges between 2 and 5 Nm (newton metre).

In addition, the maximum value of the driving torque delivered by electric motor 4 during said mechanical backlash compensation transient step is preferably substantially equal to said preload value TRQ1.

Preferably, the electronic motor-control equipment, or rather the electronic control unit 7, is furthermore programmed/configured so as to end said transmission preloading procedure with mechanical backlash compensation, or rather said stabilised preloading step, when it receives, from the vehicle driver, a driving torque request greater than said preload value TRQ1.

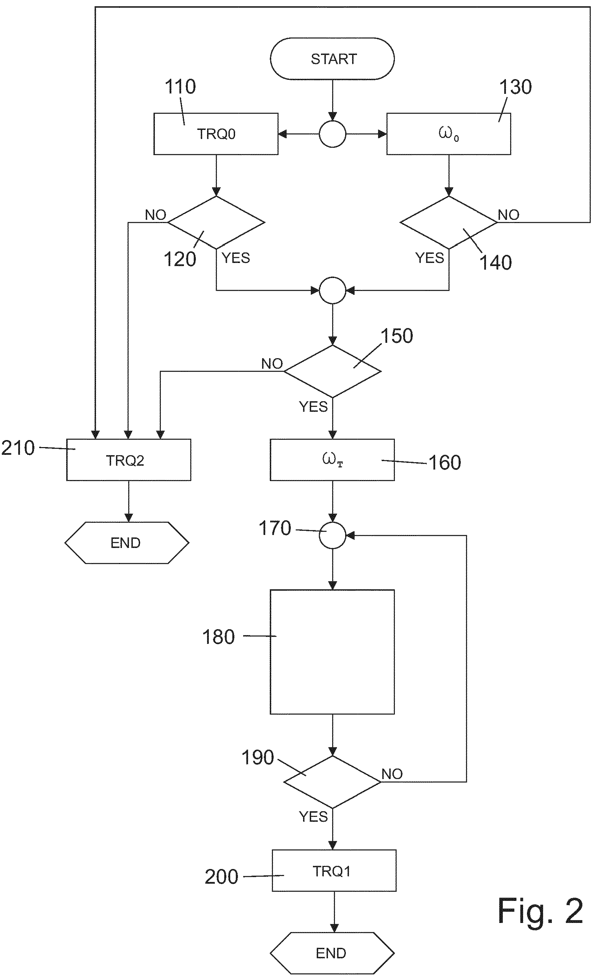

With reference to Figure 2, in particular, the electronic motor-control equipment, or rather the electronic control unit 7, is preferably programmed/configured so as to firstly determine whether the kinematic conditions of the vehicle and/or the requests of the vehicle driver allow said transmission preloading procedure with mechanical backlash compensation to be implemented.

In more detail, the electronic motor-control equipment, or rather the electronic control unit 7, is preferably programmed/configured so as to determine (block 110) the torque request TRQ0, i.e. the value of the driving torque that the vehicle driver wants the electric motor 4 to momentarily deliver.

Once the torque request TRQ0 has been determined, the electronic motor-control equipment, or rather the electronic control unit 7, is preferably programmed/configured so as to compare (block 120) the torque request TRQ0 with a first reference value, and to authorise the execution of said transmission preloading procedure with mechanical backlash compensation only if the torque request TRQ0 is substantially nil or in any case lower than said first reference value.

Preferably, said first reference value moreover ranges between 0 and 5 Nm (newton metre).

In addition or alternatively, the electronic motor-control equipment, or rather the electronic control unit 7, is preferably programmed/configured so as to determine (block 130) the instantaneous angular speed ω₀ of electric motor 4.

Once the instantaneous angular speed ω₀ of electric motor 4 has been determined, the electronic motor-control equipment, or rather the electronic control unit 7, is preferably programmed/configured so as to compare (block 140) the instantaneous angular speed ω₀ with a second reference value, and to authorise the execution of said transmission preloading procedure with mechanical backlash compensation only if the value of said instantaneous angular speed ω₀ is substantially nil or in any case lower than said second reference value.

Preferably, said second reference value moreover ranges between 0 and 10 rpm.

After establishing whether the conditions to implement said transmission preloading procedure with mechanical backlash compensation exist (block 150), the electronic motor-control equipment, or rather the electronic control unit 7, is preferably programmed/configured so as to determine (block 160) the target speed ω_{T} that the electric motor 4 should maintain to prevent the teeth of the various gears of transmission 11 from violently striking to one another, producing said unpleasant noises, vibrations and/or jolts.

In more detail, the electronic motor-control equipment, or rather the electronic control unit 7, is preferably programmed/configured so as to determine said target speed ω_{T} on the basis of the instantaneous angular speed of the drive wheels of the vehicle, or rather of the rear wheels 9.

More specifically, the electronic motor-control equipment, or rather the electronic control unit 7, is preferably programmed/configured so as to determine said target speed ω_{T}, optionally by means of interpolation, starting from a reference table advantageously stored inside the same electronic motor-control equipment, or rather the electronic control unit 7, which associates a series of sample values of the instantaneous angular speed with corresponding values of said target speed ω_{T}.

Once the target speed ω_{T} has been determined, the electronic motor-control equipment, or rather the electronic control unit 7, is preferably programmed/configured so as to implement a feedback control of the rotation speed of electric motor 4, based on said target speed ω_{T}. Preferably, the feedback control is furthermore a proportional-integral type control.

In more detail, the electronic motor-control equipment, or rather the electronic control unit 7, is preferably programmed/configured so as to continuously compare (block 170) the angular speed of electric motor 4 with the target speed ω_{T}, and to calculate/determine (block 180), on the basis of the difference between these two values, the driving torque that the electric motor 4 must momentarily deliver.

In addition, the electronic motor-control equipment, or rather the electronic control unit 7, is preferably programmed/configured so as to end (block 190) the feedback control of the rotation speed of electric motor 4, and the mechanical backlash compensation transient step, when the instantaneous driving torque reaches and stabilises in the neighbourhood of said first preload value TRQ1.

Once the feedback control of the rotation speed electric motor 4 has ended, the electronic motor-control equipment, or rather the electronic control unit 7, is preferably programmed/configured so as to maintain (block 200) the driving torque delivered by the electric motor 4 at a predetermined value substantially equal to said first preload value TRQ1, advantageously until it receives a driving-torque request of a higher value from the vehicle driver.

Finally, with reference to Figure 2, in the event that said transmission preloading procedure with mechanical backlash compensation is not implementable, the electronic motor-control equipment, or rather the electronic control unit 7, is preferably programmed/configured to command (block 210) the electric motor 4 so that the driving torque delivered by the motor almost immediately reaches a second predetermined preload value TRQ2, which rapidly brings and stably maintains the teeth of the various gears of transmission 11 (or rather the flanks of the teeth of the various gears of transmission 11) in abutment to one another, advantageously substantially without causing a rotation of the drive wheels of the vehicle, or rather of the rear wheels 9.

Preferably, also said second preload value TRQ2 is moreover substantially constant over time and/or preferably ranges between 2 and 5 Nm (newton metre).

In more detail, the preload value TRQ2 is preferably, though not necessarily, substantially equal to the preload value TRQ1.

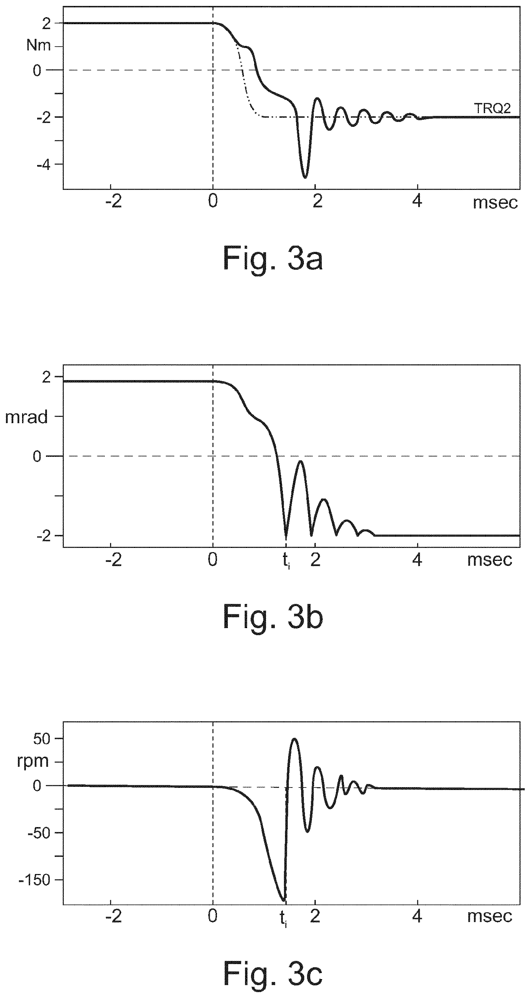

Figures 3a to 3c show the trend over time, respectively, of the transmitted torque, the angular position and the angular speed of a generic gear of transmission 11 in the case where the electronic motor-control equipment, or rather the electronic control unit 7, command the electric motor 4 so that the driving torque delivered by the motor substantially immediately reaches the preload value TRQ2.

In this case, at instant tᵢ after selection of the rearward gear (reverse gear) by the driver, the tooth or teeth of the generic gear of transmission 11 strike against the corresponding tooth or teeth of the immediately following and/or preceding gear with a very high speed (the angular speed of the gear is over 150 rpm in Figure 3c), and then begin to rebound, counteracted in an increasingly effective manner by the driving torque delivered by electric motor 4.

Clearly, the angular displacement made by the gear of transmission 11 (see Figure 3b) is determined by the mechanical backlash between the gear teeth and is of a reduced value.

The continuous rebounding of the gear teeth is the main cause of said unpleasant noises, vibrations and/or jolts.

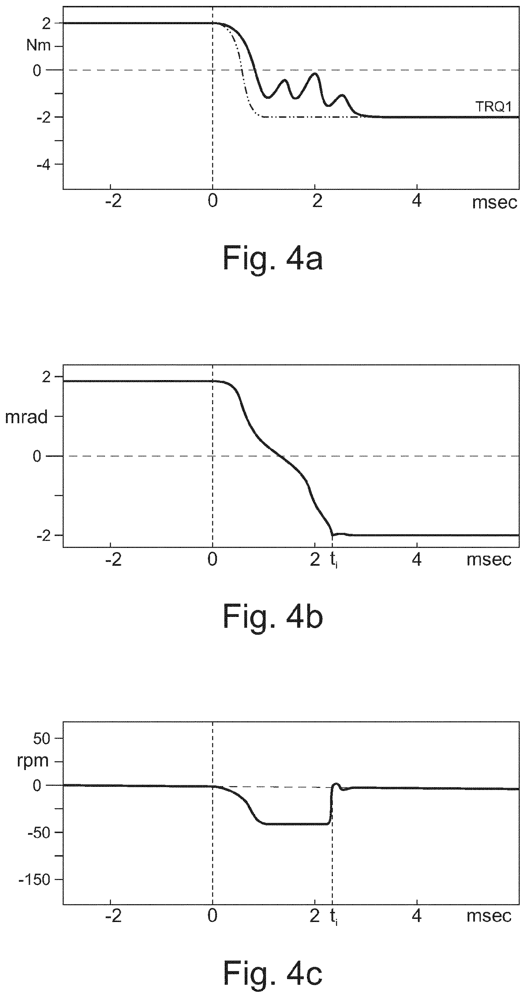

Figures 4a to 4c, on the other hand, show the the trend over time, respectively, of the transmitted torque, the angular position and the angular speed of the same gear of transmission 11 in the case where the electronic motor-control equipment, or rather the electronic control unit 7, implements said transmission preloading procedure with mechanical backlash compensation.

In this second case, after selection of the rearward gear (reverse gear) by the driver, the tooth or teeth of said gear of transmission 11 approach the teeth of the immediately following and/or preceding gear with a relatively low speed (less than 50 rpm in Figure 4c), and at the instant tᵢ they strike and remain in contact with the tooth or teeth of the immediately following and/or preceding gear with practically no significant rebound.

The absence of significant rebound avoids generation of unpleasant noises, vibrations and/or jolts.

Clearly, the angular displacement made by the gear of transmission 11 (see Figure 4b) is equal to the previous case, and is determined by the mechanical backlash between the gear teeth.

The advantages connected to the implementation of said transmission preloading procedure with mechanical backlash compensation are remarkable.

The mechanical backlash compensation transient step allows the various gears of transmission 11 to be brought into abutment silently and with practically no vibrations and/or jolts clearly perceptible by the persons on board the motor vehicle 1.

Finally, it is clear that modifications and variations may be made to motor vehicle 1 and to the control method of electric motor 4 implemented by the electronic motor-control equipment, or rather the electronic control unit 7, without thereby departing from the scope of the present invention.

## Claims

1. A method of controlling the electric motor of a road motor vehicle (1) which comprises: a plurality of ground-resting wheels (8, 9); and an electric motor (4) which is mechanically connected to at least one drive wheel (9) of the vehicle by means of a transmission (11), and is adapted to drive into rotation said at least one drive wheel (9);
the method of controlling the electric motor comprising a transmission preloading step in which the electric motor (4) delivers a driving torque capable of bringing the teeth of the various gears of the transmission (11) stably into abutment to one another, substantially without causing the rotation of said at least one drive wheel (9);
said method of controlling the electric motor being **characterised in that** said transmission preloading step includes a transient backlash compensation step, in which the rotation speed of the electric motor (4) is controlled in such a way that the teeth of the various gears of the transmission (11) come into contact to one the other with an approaching speed lower than a predetermined maximum threshold.

2. Method of controlling the electric motor of a road motor vehicle according to Claim 1, wherein said transmission preloading phase moreover comprises a stabilised preloading step, consecutive to said mechanical backlash compensation transient step, wherein the electric motor (4) is substantially motionless and delivers a first driving torque (TRQ1) such as to maintain the teeth of the various gears of said transmission (11) stably in abutment to one another.

3. Method of controlling the electric motor of a road motor vehicle according to Claim 1 or 2, wherein during said transient backlash compensation step the driving torque delivered by the electric motor (4) is varied so as to maintain the angular speed of the motor substantially equal to a predetermined target speed (ω_{T}).

4. Method of controlling the electric motor of a road motor vehicle according to Claim 3, wherein said target speed (ω_{T}) is determined on the basis of the rotation speed of said at least one drive wheel (9).

5. Method of controlling the electric motor of a road motor vehicle according to Claim 4, wherein said target speed (ω_{T}) is lower than or equal to 75 rpm.

6. Method of controlling the electric motor of a road motor vehicle according to Claim 4 or 5, wherein said target speed (ω_{T}) is lower than or equal to 50 rpm.

7. Method of controlling the electric motor of a road motor vehicle according to any one of the preceding claims, wherein the rotation speed of the electric motor (4), during said mechanical backlash compensation transient step, is controlled implementing a proportional-integral type feedback control.

8. Method of controlling the electric motor of a road motor vehicle according to any one of the preceding claims, wherein said predetermined maximum threshold allows a soft contact of the teeth of the various gears of said transmission (11).

9. A road motor vehicle (1) provided with ground-resting wheels (8, 9) and comprising: at least one electric motor (4) which is mechanically connected to at least one wheel (9) of said ground-resting wheels (8, 9) by means of a transmission (11), and is adapted to drive into rotation said at least one wheel (9); an electric-energy accumulator (5) which is adapted to store therein a given amount of electric energy to be supplied to said at least one electric motor (4); and an electronic motor-control equipment (6, 7), which powers and commands the electric motor (4) according to commands it receives from the vehicle driver;
the road motor vehicle (1) being **characterised in that** said electronic motor-control equipment (6, 7) is programmed /configured to implement a control method of said electric motor (4) according to any one of the preceding claims.
